(19)

Europäisches
Patentamt

European
Patent Office

Office européen
des brevets

(11) **EP 4 288 315 B1**

(12) **EUROPEAN PATENT SPECIFICATION**

(45) Date of publication and mention
of the grant of the patent:
**29.01.2025 Bulletin 2025/05**

(21) Application number: **22709688.0**

(22) Date of filing: **01.03.2022**

(51) International Patent Classification (IPC):
**B60W 40/103** (2012.01)   **B60W 40/114** (2012.01)
**B60W 40/12** (2012.01)   **B60W 40/10** (2012.01)
**B60W 50/00** (2006.01)

(52) Cooperative Patent Classification (CPC):
**B60W 40/103; B60W 40/10; B60W 40/114;
B60W 40/12;** B60W 2050/0033; B60W 2520/10;
B60W 2520/105; B60W 2520/12; B60W 2540/18

(86) International application number:
**PCT/EP2022/055054**

(87) International publication number:
**WO 2022/207212 (06.10.2022 Gazette 2022/40)**

(54) **METHOD AND SYSTEM FOR DETERMINING OPERATING PERFORMANCE PARAMETERS OF A DEVICE**

VERFAHREN UND SYSTEM ZUR BESTIMMUNG VON BETRIEBSLEISTUNGSPARAMETERN
EINER VORRICHTUNG

PROCÉDÉ ET SYSTÈME PERMETTANT DE DÉTERMINER LES PARAMÈTRES DE
PERFORMANCE DE FONCTIONNEMENT D'UN DISPOSITIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2021 EP 21165650**

(43) Date of publication of application:
**13.12.2023 Bulletin 2023/50**

(73) Proprietor: **Siemens Industry Software NV
3001 Leuven (BE)**

(72) Inventors:
• **RUGA, Ludovico
3000 Leuven (BE)**
• **DIRICKX, Tom
3520 Zonhoven (BE)**

(74) Representative: **Siemens Patent Attorneys
Postfach 22 16 34
80506 München (DE)**

(56) References cited:
**DE-C2- 4 123 053**

• **BAFFET G ET AL: "Estimation of vehicle sideslip,
tire force and wheel cornering stiffness",
CONTROL ENGINEERING PRACTICE,
PERGAMON PRESS, OXFORD, GB, vol. 17, no.
11, 1 November 2009 (2009-11-01), pages 1255 -
1264, XP026666765, ISSN: 0967-0661, [retrieved
on 20090621], DOI: 10.1016/
J.CONENGPRAC.2009.05.005**
• **ANDERSON R ET AL: "Estimation of tire
comering stiffness using GPS to improve model
based estimation of vehicle states",
INTELLIGENT VEHICLES SYMPOSIUM, 2005.
PROCEEDINGS. IEEE LAS VEGAS, NV, USA
JUNE 6-8, 2005, PISCATAWAY, NJ, USA,IEEE,
PISCATAWAY, NJ, USA, 6 June 2005 (2005-06-06),
pages 801 - 806, XP010833895, ISBN:
978-0-7803-8961-8, DOI: 10.1109/
IVS.2005.1505203**

**Description**

FIELD OF THE INVENTION

The invention relates to a method of determining operational performance parameters of a device, in particular of a vehicle, with device mounted sensors and computer-implemented models. Further, the invention relates to a system, in particular to a virtual sensor applied to a device, in particular to a vehicle, for determining operational performance parameters of said device, said system comprising device mounted sensors at least one processing unit adapted to execute the above mentioned computer-implemented method to generate an output parameter set.

More specifically, the invention relates to a virtual sensor or virtual/soft sensing (proxy sensing, inferential sensing, or surrogate sensing) in particular for a vehicle enabling feasible and economical alternatives to costly or impractical physical measurement instrumentation. Virtual sensing is an estimation technique based on the combination of physically measured data and suitable models to obtain an estimation of the desired quantities in the area of interest without applying real sensors or directly contacting the object, or the improvement of a directly measured quantity (e.g. increased stabilization and reliability, noise reduction).

BACKGROUND OF THE INVENTION

From the documents:

- F. Naets, S. van Aalst, B. Boulkroune, N. E. Ghouti and W. Desmet, "Design and Experimental Validation of a Stable Two-Stage Estimator for Automotive Sideslip Angle and Tire Parameters," (in IEEE Transactions on Vehicular Technology, vol. 66, no. 11, pp. 9727-9742, Nov. 2017, doi: 10.1109/TVT.2017.2742665),
- S. van Aalst, F. Naets., B. Boulkroune, W. Nijs and W. Desmet, "An Adaptive Vehicle Sideslip Estimator for Reliable Estimation in Low and High Excitation Driving", IFAC-PapersOnLine, vol. 51, no. 9, pp. 243-248, 2018,

it is known that by coupling a single-track vehicle model and an adaptive linear tire model, the non-linear relation between tire slip angle and lateral force may be considered only for high values of the tire slip angle.

As in M. Ricci, "Vehicle parameters estimation techniques in low response maneuvers", 2018, proposed, the accuracy of the estimated lateral velocity may be improved by considering roll motion.

From the documents:

- BAFFET G ET AL: "Estimation of vehicle sideslip, tire force and wheel cornering stiffness", CONTROL ENGINEERING PRACTICE, PERGAMON PRESS, OXFORD, GB, vol. 17, no. 11, 1 November 2009 (2009-11-01), pages 1255-1264, XP026666765, ISSN: 0967-0661, DOI: 10.1016/ J.CONENGPRAC.2009.05.005,
- ANDERSON R ET AL: "Estimation of tire cornering stiffness using GPS to improve model based estimation of vehicle states", INTELLIGENT VEHICLES SYMPOSIUM, 2005. PROCEEDINGS. IEEE LAS VEGAS, NV, USA JUNE 6-8, 2005, PISCATAWAY, NJ, USA, IEEE, PISCATAWAY, NJ, USA, 6 June 2005 (2005-06-06), pages 801-806, XP010833895, DOI: 10.1109/IVS.2005.1505203 ISBN: 978-0-7803-8961-8,

aspects of claim's one preamble are respectively known.

From DE 41 23 053 C2 an arrangement of Kalman-filters used in a vehicle is known to determine motion-characteristics.

The steering angle at the steering wheel may be one of the inputs of the vehicle models. It is typically obtained by measuring the angle at the steering wheel and dividing it by a known ratio. This relation, however, is known to be non-linear. An estimator to address this issue is proposed in: G. Streppa, "Rotational motion identification from MEMS inertial sensors", 2018.

Virtual sensing in the automotive field has mostly been used in the field of vehicle control. The invention also aims to extending the use of virtual sensors to the domain of vehicle dynamics analysis as an alternative to current extensive testing approaches which are expensive and time-consuming. Analysis and testing require a higher degree of precision than conventional automotive estimators, as non-linear phenomena that are usually considered negligible in such application need to be considered.

This is especially true in the challenging on-center driving scenario (driving straight), where even quantities that are easily measured at higher lateral accelerations become unreliable, like the lateral velocity.

It is one object of the invention to improve determination of operational parameters of a device, in particular of a vehicle, to enable dynamic analysis and testing and to take current practice in that field to a higher degree of precision preferably for automotive estimators for non-linear phenomena, for example on-center driving scenarios.

## SUMMARY OF THE INVENTION

The object of the invention is achieved by the independent claims. The dependent claims describe advantageous developments and modifications of the invention.

The invention provides a computer-implemented method of determining operational performance parameters of a device, in particular of a vehicle, with device mounted sensors and computer-implemented models, comprising the steps:

(a) measuring a first parameter set during operation of the device using said sensors,
(b) providing a computer-implemented supplemental model and determining a second parameter set by the supplemental model,
(c) combining parameters of the first parameter set with at least one selected parameter of the second parameter set obtaining a hybrid parameter set,
(d) providing the parameters of the hybrid parameter set to a Kalman-Filter-module,
(e) the Kalman-Filter-module predicting a third parameter set by a second model being equivalent to the hybrid parameter set regarding the respective parameter types,
(f) the Kalman-Filter-module comparing the parameters of the hybrid parameter set and the third parameter set,
(g) the Kalman-Filter-module estimating an output parameter set.

A computer-implemented invention according to the invention is one which involves the use of a computer, computer network or other programmable apparatus, where one or more features are realized wholly or partly by means of a computer program. Every method step according to the invention which may be understood in the light of the description or the claims by a person with ordinary skill in the art to be done as a computer-implemented step may be considered as a computer-implemented step of the method. The computer-implemented method may contain some steps to be done without the computer.

A Kalman filter according to the invention is a linear quadratic estimation method using a series of measurements observed over time, which may contain statistical noise and other inaccuracies, wherein the Kalman filter produces estimates of unknown variables. The Kalman filter may be considered the optimal linear estimator for linear system models with additive independent white noise in both the transition and the measurement systems.

One difference between the invention and the prior art is that particular focus is placed on the estimation of the desired quantities in particular in situations where only low values and/or a low dynamic for these quantities is expected. In such cases these quantities are normally set to constant or to zero. For example in case of vehicle dynamics the cornering stiffness and sideslip angle are set to constant or zero values in situations when the steering angle is small (i.e. "on-center performance", when limited steering actions are performed to stay on a straight line on the highway). The invention proposes to consider two different models - one to prepare the hybrid parameter set and the other as part of the Kalman-filter by preferably considering a non-linear behavior - e.g. of the tire slip of a vehicle, which may be characteristic for low values of the slip angle - where, instead conventionally these quantities are considered to be zero, constant or at least linear in behavior. In case of vehicle dynamics for example a cornering stiffness for at least one vehicle tire obtained by the method according to the invention may be used to compute the lateral loads of the vehicle.

According to the invention additional steps are provided as:

(i) determining a deviation between respectively one distinct parameter of the first parameter set and the equivalent parameter of said second parameter set,
(ii) providing a correlation between said deviation values and covariance values for at least one parameter of said third parameter set,
(iii) determining a covariance value from said correlation on basis of the determined deviation,
(iv) forwarding said covariance value to said Kalman-Filter-module for estimating said output parameter set.

The covariances represent the level of uncertainty on a determined measure or estimate, in a Kalman filter. This feature uses the covariances as tuning parameters to adjust the final estimator performance.

Most preferably the device to which the invention is applied is a vehicle and wherein said at least one selected parameter may be a vehicle side slip angle.

In another preferred embodiment said parameter sets respectively comprise at least one of a lateral velocity, longitudinal velocity, yaw rate, lateral acceleration, front cornering stiffness and rear cornering stiffness.

Most preferred said Kalman-Filter-module may be an extended Kalman-filter, which is the nonlinear version of the Kalman filter which linearizes about an estimate of the current mean and covariance. The extended Kalman-filter adapts multivariate Taylor series expansions, to linearize a model about a working point. If the system model is inaccurate Monte Carlo methods, especially particle filters, may be employed for estimation. In the extended Kalman filter may be non-linear but should be differentiable functions.

One preferred application of the invention to a vehicle provides that an input to the supplemental model and/or the second model respectively is at least one of a longitudinal acceleration, a steering angle. These quantities may be easily acquired by conventional measurement equipment and may even be part of the standard equipment of an average vehicle.

Best accuracy of the outputted estimate may be obtained when said supplemental model is of a linear type and wherein said second model is of a non-linear type. This enables to use the benefits of both model types preferably depending on the operational situation. The linear-type model may preferably be a single-track vehicle model and the non-linear-type model may be an adaptive linear tire model.

In case of tuning the common filter output by means of said covariance adjustment one preferred embodiment of the invention provides that said distinct parameter for determination of the covariance value is the yaw rate, and wherein the covariance value determined from said correlation on basis of the determined deviation is forwarded to said Kalman filter as a covariance of a cornering stiffness of a vehicle tire of said vehicle, wherein said correlation provides a lower covariance value in case of a lower deviation and a higher covariance value in case of a higher deviation.

One preferred usage of the method according to the invention may be to inform the operator or user by displaying at least one parameter of said output parameter set or a modified parameter based on said output parameter set on a display to a user. One preferred embodiment of a system according to the invention therefore provides a display for displaying at least one parameter of said output parameter set or a modified parameter based on said output parameter set on a display to a user.

The method according to the invention may beneficially be used in the context of a virtual sensor applied to a device, in particular to a vehicle, for determining operational performance parameters of said device, said system comprising:

a device mounted sensors and

at least one processing unit adapted to execute the computer-implemented method according to the invention.

Visual sensors as such may be understood as a specific digital twin simulating one part of the real world and being connected to a feedback by sensors measuring physical entities to align the simulation with the real world environment around the virtual sensing location.

Advantageous configurations and embodiments of the method according to the invention follow from the claims as well as aspects of the following descriptions.

BRIEF DESCRIPTION OF THE DRAWINGS

Embodiments of the invention are now described, by way of example only, with reference to the accompanying drawings, of which:

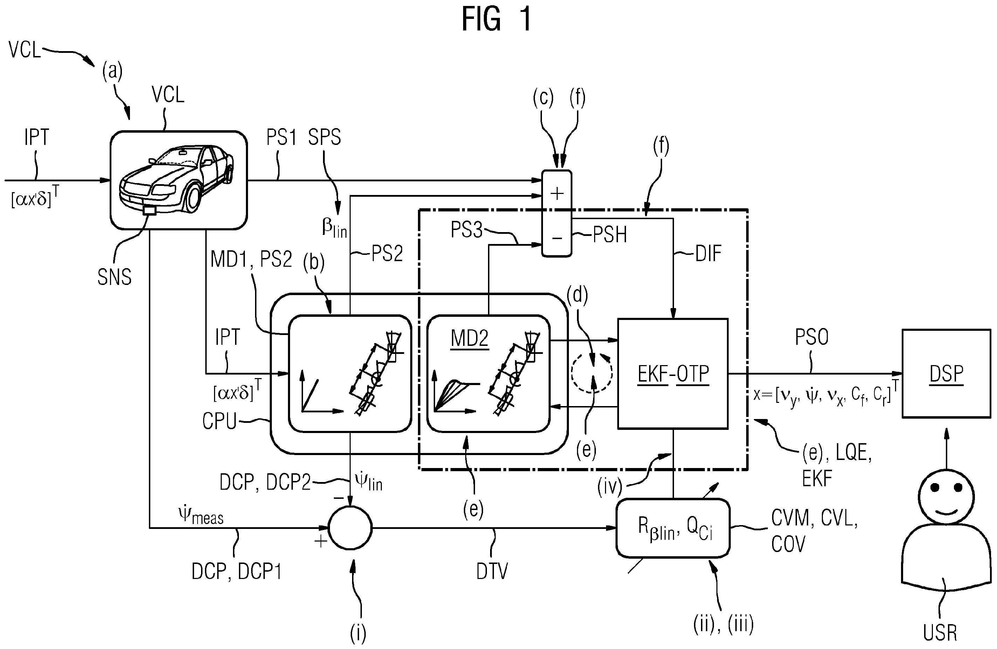

Figure 1    shows a schematic diagram illustrating the method-steps according to the invention and the system according to the invention as a virtual sensor;

The illustration in the drawings is in schematic form. It is noted that in different figures, similar or identical parameters may be provided with the same reference signs.

DESCRIPTION OF THE DRAWINGS

Figure 1 shows a schematic illustration of the method-steps according to the invention as well as a system for carrying out the method, wherein said system is a virtual sensor. Figure 1 shows said method applied to a device DVC - here a vehicle VCL, in which the method according to the invention may be incorporated - wherein a measuring [step a] of the first parameter set PS1 during operation of the vehicle VCL is performed using sensors SNS. The vehicle VCL receives a steering angle $\delta$, at the steering wheel and a longitudinal acceleration $a_x$ as an input IPT from a user respectively from the car's engine. The steering angle $\delta$ may be obtained by measuring the angle at the steering wheel and dividing it by a known ratio. The longitudinal acceleration $a_x$ may be obtained by accelerometers. This input IPT is forwarded to a computer-implemented supplemental model MD1 for determining a second parameter set PS2 [step b].

The supplemental model MD1 is a linear model. The supplemental model MD1 receives a virtual sideslip angle $\beta_{lin}$, which may be considered a virtual measurement, obtained by integrating over time the linear supplemental model MD1, assuming that under small angle assumption for a sideslip angle $\beta_{lin} = \dfrac{v_{y\,lin}}{v\_x}$ may be applied, with

$v_y$:=lateral velocity,
$v_x$:=longitudinal velocity.

The supplemental model MD1 may be formulated as follows:

$$\begin{cases} \dot{v}_{y\,lin} = \dfrac{-2 \cdot (\overline{C_f} + \overline{C_r})}{m \cdot v_x} v_{y\,lin} - \left(\dfrac{2 \cdot (\overline{C_f} \cdot l_f - \overline{C_r} \cdot l_r)}{m \cdot v_x} + v_x\right) \dot{\psi}_{lin} + \dfrac{2 \cdot \overline{C_f}}{m} \delta \\[3mm] \ddot{\psi}_{lin} = \dfrac{-2 \cdot (\overline{C_f} \cdot l_f - \overline{C_r} \cdot l_r)}{I_{zz} \cdot v_x} v_{y\,lin} - \dfrac{2 \cdot (\overline{C_f} \cdot l_f^2 + \overline{C_r} \cdot l_r^2)}{I_{zz} \cdot v_x} \dot{\psi}_{lin} + \dfrac{2 \cdot \overline{C_f} \cdot l_f}{I_{zz}} \delta \end{cases}$$

where $u = [v_x, \delta]^T$ is the input vector of the supplemental model MD1 (originating from input IPT: steering angle $\delta$, longitudinal acceleration $a_x$), $\overline{C_f}$ and $\overline{C_r}$ are front and rear cornering stiffnesses, assumed in this model to be constant. Further this supplemental model MD1 refers to:

$\dot{\psi}_{lin}$ Yaw rate
$l_f, l_r$ distance between the center of gravity and the front and rear axles respectively
$m$ Vehicle mass
$I_{zz}$ Vehicle yaw inertia.

In the next step (c) parameters of the first parameter set PS1 with at least one selected parameter SPS - here $\beta_{lin}$- of the second parameter set PS2 are combined obtaining a hybrid parameter set PSH. This hybrid parameter set PSH comprises measured quantities and at least one calculated quantity being considered as a virtual sensor measurement.

During the subsequent step (d) the parameters of the hybrid parameter set PSH are provided to a Kalman-Filter-module EKF.

The Kalman-Filter-module EKF is predicting a third parameter set PS3 by a second model MD2 being equivalent to the hybrid parameter set PSH regarding the respective parameter types within a step (e). Here, the Kalman-Filter-module EKF is an extended Kalman filter employing a single-track model coupled with an adaptive linear tire model, resulting in the set of state equations:

$$\begin{cases} \dot{v}_y = \dfrac{-2(C_f + C_r)}{m \cdot v_x} v_y - \left(\dfrac{2(C_f \cdot l_f - C_r \cdot l_r)}{m \cdot v_x} + v_x\right) \dot{\psi} + \dfrac{2 \cdot C_f}{m} \delta \\[3mm] \ddot{\psi} = \dfrac{-2(C_f \cdot l_f - C_r \cdot l_r)}{I_{zz} \cdot v_x} v_y - \dfrac{2(C_f \cdot l_f^2 + C_r \cdot l_r^2)}{I_{zz} \cdot v_x} \dot{\psi} + \dfrac{2 \cdot C_f \cdot l_f}{I_{zz}} \delta \\[3mm] \dot{v}_x = a_x + v_y \cdot \dot{\psi} \\[2mm] \dot{C}_f = 0 \\[2mm] \dot{C}_r = 0 \end{cases}$$

Where $x = [v_y, \dot{\psi}, v_x, C_f, C_r]^T$ is the Kalman-filter-state-vector and $u = [a_x, \delta]^T$ is the input vector with a meaning of the symbols as explained above.

The cornering stiffness values $C_f, C_r$ are modeled with a random walk model to consider the non-linear behavior of the tire even at low levels of lateral acceleration (as in the on-center driving condition).

The initial output equation set of the Kalman-Filter-module EKF is:

$$\begin{cases} \dot{\psi} = \dot{\psi} \\[2mm] a_y = \dfrac{-2 \cdot (C_f + C_r)}{m \cdot v_x} v_y - \dfrac{2 \cdot (l_f \cdot C_f - l_r \cdot C_r)}{m \cdot v_x} \dot{\psi} + \dfrac{2 \cdot C_f}{m} \delta \\[3mm] v_x = v_x \end{cases}$$

The final output equation of the Kalman-Filter-module EKF is obtained by augmenting this equation with the virtual measurement of said sideslip angle $\beta_{lin}$, which was obtained from said supplemental model MD1, here by integrating over time the above referenced linear model. The final equations result as:

$$\begin{cases} \dot{\psi} = \dot{\psi} \\ a_y = \dfrac{-2 \cdot (C_f + C_r)}{m \cdot v_x} v_y - \dfrac{2 \cdot (l_f \cdot C_f - l_r \cdot C_r)}{m \cdot v_x} \dot{\psi} + \dfrac{2 \cdot C_f}{m} \delta \\ v_x = v_x \\ \beta_{lin} = \dfrac{v_{y\,lin}}{v_x} \end{cases}$$

where $y = [\dot{\psi}, a_y, v_x, \beta_{lin}]^T$ is the output vector comprising quantities as explained above.

The virtual measurement of said sideslip angle $\beta_{lin}$ provides a reliable reference during straight driving, when the cornering stiffnesses are basically unobservable. Further the virtual measurement of said sideslip angle $\beta_{lin}$ provides an additional reference for the lateral velocity, which is very difficult to measure - in particular at low levels of lateral acceleration.

In a method-step (f) the Kalman-Filter-module EKF compares the parameters of the hybrid parameter set PSH and the third parameter set PS3. This is illustrated in Figure 1 by determination of a difference DIF.

In a step (g) the extended Kalman-Filter-module EKF estimates an output parameter set PSO by a Kalman-Filter-output-module EKF-OTP. The estimation is done in a known manner as a linear quadratic estimation LQE. The linear quadratic estimation LQE is an algorithm using said measurements including the history of measurements. These measurements may comprise statistical noise and other inaccuracies. The Kalman-Filter-module EKF produces estimates of the state variables that are likely to be more accurate than those based on single measurements, alone. The Kalman-Filter-module EKF estimates a joint probability distribution over the variables for each timeframe.

Using a virtual reference such as $\beta_{lin}$, as a result of a simplified model (supplemental model MD1) may correctly represent the actual behavior of the vehicle in certain operating conditions but may also lead to errors and limitations during others.

Figure 1 shows additional steps to cope with this issue respectively to increase accuracy by:

(i) determining a deviation DVT between respectively one distinct parameter DCP, DCP1 of the first parameter set PS1 and the equivalent parameter DCP, DCP2 of said second parameter set PS2,
(ii) providing a correlation CVL between said deviation DVT values and covariance values COV for at least one parameter of said third parameter set PS3
(iii) determining a covariance value COV from said correlation CVC on basis of the determined deviation DVT,
(iv) forwarding said covariance value COV to said Kalman-Filter-module EKF for estimating said output parameter set PSO.

As illustrated in the Figure a covariance module CVM provides covariance values COV based on a predetermined correlation.

The deviation DVT is a measure of non-linearity determining whether the linear supplemental model MD1 is reliable at each time step. This is done here, as:

$$DVT(N) = \left| \dot{\psi}_{meas}(N) - \dot{\psi}_{lin}(N) \right|$$

The deviation DVT value is then used to adapt covariance values COV for at least one parameter of said third parameter set PS3, for example the covariance values of the cornering stiffnesses, $Q_{C_f}$ and $Q_{C_r}$, and of the virtual sideslip angle measurement $R_{\beta_{lin}}$. The covariances COV are used as tuning parameters to adjust the final estimator performance according to the trust placed in either the model or the measure.

Preferably, the correlation CVL between said deviation DVT values and covariance values COV may provide a lower covariance value in case of a lower deviation and a higher covariance value in case of a higher deviation. In detail it preferably may apply the following ruling:

- $\dot{\psi}_{meas} \sim \dot{\psi}_{lin} \rightarrow DVT$ is small: the tire is behaving linearly. In this case,

  o $Q_{C_f}, Q_{C_r}$ are set to low values since under linear tire behavior the cornering stiffnesses do no need to be adapter
  o $R_{\beta_{lin}}$ is set to a low value since $\beta_{lin}$ accurately predicts the vehicle behavior

- $\dot{\psi}_{meas} \neq \dot{\psi}_{lin} \rightarrow DVT$ is large: the tire is behaving in a non-linear way. In this case,

  o $Q_{C_f}, Q_{C_r}$ are set to high values since the cornering stiffnesses values are not reliable in this condition and need to be adapted

o $R_{\beta_{lin}}$ is set to a high value since $\beta_{lin}$ is no longer an accurate estimate of the vehicle sideslip angle

- $\dot{\psi}_{meas} = \dot{\psi}_{lin} \rightarrow DVT = 0$: this occurs in straight driving, where no lateral excitation is present. In this case,

o $Q_{C_f} Q_{C_r}$ are set to zero to stabilize the estimator and avoid drifting of the cornering stiffnesses
o $R_{\beta_{lin}}$ is set to a low value since $\beta_{lin}$ accurately predicts the vehicle behavior during straight driving.

The System SYS shown in Figure 1 comprises at least one processing unit CPU adapted to execute the computer-implemented method according to the invention to generate said output parameter set PSO. It further comprises a display DSP for displaying at least one parameter of said output parameter set PSO or a modified parameter based on said output parameter set PSO on a display DSP to a user USR.

Although the present invention has been described in detail with reference to the preferred embodiment, it is to be understood that the present invention is not limited by the disclosed examples but by the scope defined by the claims, and that numerous additional modifications and variations could be made thereto by a person skilled in the art without departing from the scope of the invention defined by the independent claims.

It should be noted that the use of "a" or "an" throughout this application does not exclude a plurality, and "comprising" does not exclude other steps or parameters. Also, parameters described in association with different embodiments may be combined. It should also be noted that reference signs in the claims should not be construed as limiting the scope of the claims.

**Claims**

1. Computer-implemented method of determining operational performance parameters of a device, in particular of a vehicle (VCL), with device mounted sensors (SNS) and computer-implemented models (MDS, MD2), comprising the steps:

   (a) measuring a first parameter set (PS1) during operation of the device (DVC) using said sensors (SNS),
   (b) providing a computer-implemented supplemental model (MD1) and determining a second parameter set (PS2) by the supplemental model (MD1),
   (c) combining parameters of the first parameter set (PS1) with at least one selected parameter (SPS) of the second parameter set (PS2) obtaining a hybrid parameter set (PSH),
   (d) providing the parameters of the hybrid parameter set (PSH) to a Kalman-Filter-module (EKF),
   (e) the Kalman-Filter-module (EKF) predicting a third parameter set (PS3) by a second model (MD2) being equivalent to the hybrid parameter set (PSH) regarding the respective parameter types,
   (f) the Kalman-Filter-module (EKF) comparing the parameters of the hybrid parameter set (PSH) and the third parameter set (PS3),
   (g) the Kalman-Filter-module (EKF) estimating an output parameter set (PSO),

   the method **characterized in** comprising:

   (i) determining a deviation (DVT) between respectively one distinct parameter (DCP) of the first parameter set (PS1) and the equivalent parameter of said second parameter set (PS2),
   (ii) providing a correlation (CVL) between said deviation (DVT) values and covariance values (COV) for at least one parameter of said third parameter set (PS3),
   (iii) determining a covariance value (COV) from said correlation (CVC) on basis of the determined deviation (DVT),
   (iv) forwarding said covariance value (COV) to said Kalman-Filter-module (EKF) for estimating said output parameter set (PSO).

2. Method according to at least one of the previous claims,

   wherein said device is a vehicle,
   wherein said at least one selected parameter (SPS) is a vehicle side slip angle (BTL).

3. Method according to at least one of the previous claims,
   wherein said parameter sets (PS1, PSH, PS3) respectively comprise at least one of a lateral velocity (PVY), longitudinal velocity (PVX), yaw rate (PYR), lateral acceleration (PAY), front cornering stiffness (PCF)and rear cornering stiffness (PCR), wherein said Kalman-Filter-module (EKF) is an extended Kalman-filter,

4. Method according to at least one of the previous claims,
wherein an input to the supplemental model (MD1) and/or the second model (MD2) respectively is at least one of a longitudinal acceleration (PAX), a steering angle (PSA),

5. Method according to at least one of the previous claims,

wherein said supplemental model (MD1) is of a linear type,
wherein said second model (MD2) is of a non-linear type,

6. Method according to at least one of the previous claims,

wherein said distinct parameter (DCP) for determination of the covariance value (COV) is the yaw rate (PYR), and wherein the covariance value (COV) determined from said correlation (CVC) on basis of the determined deviation (DVT) is forwarded to said Kalman filter (EKF) as a covariance of a cornering stiffness (CRF,CRR) of a vehicle tire (VTR) of said vehicle (VCL),
wherein said correlation (CVL) provides a lower covariance (COV) value in case of a lower deviation and a higher covariance (COV) value in case of a higher deviation.

7. Method according to at least one of the previous claims, comprising the additional step of displaying at least one parameter of said output parameter set (PSO) or a modified parameter based on said output parameter set (PSO) on a display (DSP) to a user (USR).

8. System (SYS), in particular virtual sensor (VRS) applied to a device, in particular to a vehicle (VCL), for determining operational performance parameters of said device, said system comprising:

device mounted sensors (SNS)
at least one processing unit (CPU) adapted to execute the computer-implemented method according to at least one of the previous claims to generate said output parameter set (PSO).

9. System (SYS)according to claim 8 comprising a display (DSP) for displaying at least one parameter of said output parameter set (PSO) or a modified parameter based on said output parameter set (PSO) on a display (DSP) to a user (USR).

**Patentansprüche**

1. Computergestütztes Verfahren zum Bestimmen von
Betriebsleistungsparametern einer Vorrichtung, insbesondere eines Fahrzeugs (VCL), mit an der Vorrichtung angebrachten Sensoren (SNS) und computergestützten Modellen (MDS, MD2), das folgende Schritte umfasst:

(a) Messen eines ersten Parametersatzes (PS1) beim Betrieb der Vorrichtung (DVC) mithilfe der Sensoren (SNS),
(b) Bereitstellen eines computergestützten zusätzlichen Modells (MD1) und Bestimmen eines zweiten Parametersatzes (PS2) über das zusätzliche Modell (MD1),
(c) Kombinieren von Parametern aus dem ersten Parametersatz (PS1) mit mindestens einem ausgewählten Parameter (SPS) aus dem zweiten Parametersatz (PS2) und so Erhalten eines gemischten Parametersatzes (PSH),
(d) Bereitstellen der Parameter aus dem gemischten Parametersatz (PSH) für ein Kalman-Filter-Modul (EKF),
(e) Prognostizieren eines dritten Parametersatzes (PS3) durch das Kalman-Filter-Modul (EKF) über ein zweites Modell (MD2), der dem gemischten Parametersatz (PSH) hinsichtlich der jeweiligen Parametertypen entspricht,
(f) Vergleichen der Parameter aus dem gemischten Parametersatz (PSH) und dem dritten Parametersatz (PS3) durch das Kalman-Filter-Modul (EKF),
(g) Schätzen eines Ausgabe-Parametersatzes (PSO) durch das Kalman-Filter-Modul (EKF),
wobei das Verfahren **dadurch gekennzeichnet ist, dass** es Folgendes umfasst:

(i) Bestimmen einer Abweichung (DVT) zwischen jeweils einem konkreten Parameter (DCP) aus dem ersten Parametersatz (PS1) und dem entsprechenden Parameter aus dem zweiten Parametersatz (PS2),
(ii) Bereitstellen einer Korrelation (CVL) zwischen den Werten für die Abweichung (DVT) und Kovarianzwerten (COV) für mindestens einen Parameter aus dem dritten Parametersatz (PS3),
(iii) Bestimmen eines Kovarianzwerts (COV) aus der Korrelation (CVC) auf der Grundlage der bestimmten Abweichung (DVT),
(iv) Weiterleiten des Kovarianzwerts (COV) zu dem Kalman-Filter-Modul (EKF) zum Schätzen des Ausgabe-Parametersatzes (PSO).

2. Verfahren nach mindestens einem der vorhergehenden Ansprüche, wobei es sich bei der Vorrichtung um ein Fahrzeug handelt, wobei es sich bei dem mindestens einen ausgewählten Parameter (SPS) um einen Schwimmwinkel (BTL) des Fahrzeugs handelt.

3. Verfahren nach mindestens einem der vorhergehenden Ansprüche, wobei die Parametersätze (PS1, PSH, PS3) jeweils eine Quergeschwindigkeit (PVY), eine Längsgeschwindigkeit (PVX), eine Gierrate (PYR), eine Querbeschleunigung (PAY), eine vordere Schräglaufsteifigkeit (PCF) und/oder eine hintere Schräglaufsteifigkeit (PCR) umfassen,
wobei es sich bei dem Kalman-Filter-Modul (EKF) um einen erweiterten Kalman-Filter handelt.

4. Verfahren nach mindestens einem der vorhergehenden Ansprüche, wobei es sich bei einer Eingabe in das zusätzliche Modell (MD1) und/oder das zweite Modell (MD2) jeweils um eine Längsbeschleunigung (PAX) und/oder einen Lenkwinkel (PSA) handelt.

5. Verfahren nach mindestens einem der vorhergehenden Ansprüche, wobei das zusätzliche Modell (MD1) ein lineares Modell ist, wobei das zweite Modell (MD2) ein nichtlineares Modell ist.

6. Verfahren nach mindestens einem der vorhergehenden Ansprüche, wobei es sich bei dem konkreten Parameter (DCP) zum Bestimmen des Kovarianzwerts (COV) um die Gierrate (PYR) handelt und wobei der anhand der Korrelation (CVC) auf der Grundlage der bestimmten Abweichung (DVT) bestimmte Kovarianzwert (COV) als Kovarianz einer Schräglaufsteifigkeit (CRF, CRR) eines Fahrzeugreifens (VTR) des Fahrzeugs (VCL) zum Kalman-Filter (EKF) weitergeleitet wird,
wobei die Korrelation (CVL) bei einer geringeren Abweichung einen geringeren Kovarianzwert (COV) und bei einer höheren Abweichung einen höheren Kovarianzwert (COV) bereitstellt.

7. Verfahren nach mindestens einem der vorhergehenden Ansprüche, das folgenden zusätzlichen Schritt umfasst:
Anzeigen mindestens eines Parameters aus dem Ausgabe-Parametersatz (PSO) oder eines modifizierten Parameters auf der Grundlage des Ausgabe-Parametersatzes (PSO) auf einer Anzeige (DSP) für einen Benutzer (USR).

8. System (SYS), insbesondere auf eine Vorrichtung, insbesondere ein Fahrzeug (VCL), angewendeter virtueller Sensor (VRS), zum Bestimmen von Betriebsleistungsparametern der Vorrichtung, wobei das System Folgendes umfasst:

an der Vorrichtung angebrachte Sensoren (SNS),
mindestens eine Verarbeitungseinheit (CPU), die so ausgelegt ist, dass sie das computergestützte Verfahren nach mindestens einem der vorhergehenden Ansprüche ausführt und so den Ausgabe-Parametersatz (PSO) erzeugt.

9. System (SYS) nach Anspruch 8, das eine Anzeige (DSP) zum Anzeigen mindestens eines Parameters aus dem Ausgabe-Parametersatz (PSO) oder eines modifizierten Parameters auf der Grundlage des Ausgabe-Parametersatzes (PSO) auf einer Anzeige (DSP) für einen Benutzer (USR) umfasst.

**Revendications**

1. Procédé mis en oeuvre par ordinateur de détermination de paramètres de performance de fonctionnement d'un dispositif, en particulier d'un véhicule (VCL), par des capteurs (SNS) montés sur le dispositif et des modèles (MDS, MD2) mis en oeuvre par ordinateur, comprenant les stades :

(a) on mesure un premier ensemble (PS1) de paramètres pendant le fonctionnement du dispositif (DVC) en utilisant lesdits capteurs (SNS),

(b) on se procure un modèle (MD1) supplémentaire mis en oeuvre par ordinateur et on détermine un deuxième ensemble (PS2) de paramètres par le modèle (MD1) supplémentaire,

(c) on combine des paramètres du premier ensemble (PS1) de paramètres à au moins un paramètre (SPS) sélectionné du deuxième ensemble (PS2) de paramètres en obtenant un ensemble (PSH) hybride de paramètres,

(d) on envoie les paramètres de l'ensemble (PSH) hybride de paramètres à un module (EKF) de filtre de Kalman,

(e) le module (EKF) de filtre de Kalman prédit qu'un troisième ensemble (PS3) de paramètres par un deuxième modèle (MD2) est équivalent à l'ensemble (PSH) hybride de paramètres en ce qui concerne les types respectifs de paramètres,

(f) le module (EKF) de filtre de Kalman compare les paramètres de l'ensemble (PSH) hybride de paramètres et le troisième ensemble (PS3) de paramètres,

(g) le module (EKF) de filtre de Kalman estime un ensemble (PSO) de sortie de paramètres, le procédé étant **caractérisé en ce qu'**il comprend :

(i) déterminer un écart (DVT) entre respectivement un paramètre (DCP) distinct du premier ensemble (PS1) de paramètres et le paramètre équivalent dudit deuxième ensemble (PS2) de paramètres,

(ii) se procurer une corrélation (CVL) entre les valeurs dudit écart (DVT) et des valeurs (COV) de covariance pour au moins un paramètre dudit troisième ensemble (PS3) de paramètres,

(iii) déterminer une valeur (COV) de covariance à partir de ladite corrélation (CVC) sur la base de l'écart (DVT) déterminé,

(iv) acheminer ladite valeur (COV) de covariance audit module (EKF) de filtre de Kalman pour estimer ledit ensemble (PSO) de sortie de paramètres.

2. Procédé suivant au moins l'une des revendications précédentes,

dans lequel ledit dispositif est un véhicule,

dans lequel ledit au moins un paramètre (SPS) sélectionné est un angle (BTL) de glissement latéral d'un véhicule.

3. Procédé suivant au moins l'une des revendications précédentes,

dans lequel lesdits ensembles (PS1, PSH, PS3) de paramètres comprennent respectivement au moins l'un d'une vitesse (PVY) latérale, d'une vitesse (PVX) latérale, d'un angle (PYR) de lacet, d'une accélération (PAY) latérale, d'une résistance (PCF) avant en virages et d'une résistance (PCR) arrière en virages,

dans lequel ledit module (EKF) de filtre de Kalman est un filtre de Kalman étendu.

4. Procédé suivant au moins l'une des revendications précédentes,

dans lequel une entrée dans le modèle (MD1) supplémentaire et/ou le deuxième modèle (MD2) est respectivement au moins l'un d'une accélération (PAX) longitudinale, d'un angle (PSA) de braquage.

5. Procédé suivant au moins l'une des revendications précédentes,

dans lequel ledit modèle (MD1) supplémentaire est d'un type linéaire,

dans lequel ledit deuxième modèle (MD2) est d'un type non linéaire.

6. Procédé suivant au moins l'une des revendications précédentes,

dans lequel ledit paramètre (DCP) distinct pour la détermination de la valeur (COV) de covariance est l'angle (PYR) de lacet,

et dans lequel la valeur (COV) de covariance déterminée à partir de ladite corrélation (CVC) sur la base de l'écart (DVT) déterminé est acheminée audit filtre (EKF) de Kalman comme covariance d'une résistance (CRF, CRR) en virages d'un pneumatique (VTR) dudit véhicule (VCL),

dans lequel ladite corrélation (CVL) donne une valeur (COV) de covariance assez petite dans le cas d'un écart assez petit et une valeur de covariance (COV) assez grande dans le cas d'un écart assez grand.

7. Procédé suivant au moins l'une des revendications précédentes, comprenant le stade supplémentaire d'affichage d'au moins un paramètre dudit ensemble (PSO) de paramètres de sortie ou d'un paramètre modifié sur la base dudit ensemble (PSO) de paramètres de sortie sur un affichage (DSP) pour un utilisateur (USR).

8. Système (SYS), en particulier capteur (VRS) virtuel appliqué à un dispositif, en particulier à un véhicule (VCL), de détermination de paramètres de performance de fonctionnement dudit dispositif, ledit système comprenant :

   des capteurs (SNS) montés sur le dispositif au moins une unité (CPU) de traitement propre à exécuter le procédé mis en oeuvre par ordinateur suivant au moins l'une des revendications précédentes pour créer ledit ensemble (PSO) de paramètres de sortie.

9. Système (SYS) suivant la revendication 8, comprenant un affichage (DSP) d'affichage d'au moins un paramètre dudit ensemble (PSO) de paramètres de sortie ou d'un paramètre modifié sur la base dudit ensemble (PSO) de paramètres de sortie sur un affichage (DSP) pour un utilisateur (USR).

# FIG 1

EP 4 288 315 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4123053 C2

**Non-patent literature cited in the description**

- **F. NAETS** ; **S. VAN AALST** ; **B. BOULKROUNE** ; **N. E. GHOUTI** ; **W. DESMET**. Design and Experimental Validation of a Stable Two-Stage Estimator for Automotive Sideslip Angle and Tire Parameters. *IEEE Transactions on Vehicular Technology*, November 2017, vol. 66 (11), 9727-9742
- **S. VAN AALST** ; **F. NAETS.** ; **B. BOULKROUNE** ; **W. NIJS** ; **W. DESMET**. An Adaptive Vehicle Sideslip Estimator for Reliable Estimation in Low and High Excitation Driving. *IFAC-PapersOnLine*, 2018, vol. 51 (9), 243-248
- **M. RICCI**. *Vehicle parameters estimation techniques in low response maneuvers*, 2018
- Estimation of vehicle sideslip, tire force and wheel cornering stiffness. **BAFFET G et al.** CONTROL ENGINEERING PRACTICE. PERGAMON PRESS, 01 November 2009, vol. 17, 1255-1264
- Estimation of tire cornering stiffness using GPS to improve model based estimation of vehicle states. **ANDERSON R et al.** INTELLIGENT VEHICLES SYMPOSIUM, 2005. PROCEEDINGS. IEEE. IEEE, 06 June 2005, 801-806
- **G. STREPPA**. *Rotational motion identification from MEMS inertial sensors*, 2018